# EUROPEAN PATENT APPLICATION

(11) **EP 4 510 766 A1**
(43) Date of publication of application: **19.02.2025**
(21) Application number: 23795271.8
(22) Date of filing: 23.04.2023
(51) Int. Cl.: H04W 76/19

(54) **COMMUNICATION METHOD, AND DEVICE**

(30) Priority: 25.04.2022 CN 202210444170; 25.05.2022 CN 202210578450
(71) Applicant: Huawei Technologies Co., Ltd., Shenzhen, Guangdong 518129 (CN)
(72) Inventor: YAO, Chuting, Shenzhen, Guangdong 518129 (CN); CAI, Yu, Shenzhen, Guangdong 518129 (CN); XU, Haibo, Shenzhen, Guangdong 518129 (CN); WANG, Rui, Shenzhen, Guangdong 518129 (CN); PAN, Xiaodan, Shenzhen, Guangdong 518129 (CN)
(74) Representative: Körber, Martin Hans
(86) International application number: PCT/CN2023/090046
(87) International publication number: WO 2023/207838

(57) **Abstract**

This application relates to a communication method and device. A remote terminal device receives a first data packet from a relay terminal device by using an SRB1. The first data packet includes a first message and an SRAP header, and the first message is an RRC connection resume message or an RRC reestablishment message. The remote terminal device removes the SRAP header via an SRAP entity to obtain configuration information. The SRAP entity is determined before the SRAP header is removed. The remote terminal device configures the SRAP entity based on the configuration information. The remote terminal device may predetermine the SRAP entity. In this way, after receiving the first data packet carrying the SRAP header, the remote terminal device can remove the SRAP header via the SRAP entity, so that the RRC reestablishment message or the RRC connection resume message can be obtained, thereby improving a success rate of RRC reestablishment or RRC resume of the remote terminal device.

## Description

### CROSS-REFERENCE TO RELATED APPLICATIONS

This application claims priorities to Chinese Patent Application No. 202210444170.3, filed with the China National Intellectual Property Administration on April 25, 2022 and entitled "COMMUNICATION METHOD", and to Chinese Patent Application No. 202210578450.3, filed with the China National Intellectual Property Administration on May 25, 2022 and entitled "COMMUNICATION METHOD AND DEVICE", both of which are incorporated herein by reference in their entireties.

### TECHNICAL FIELD

This application relates to the field of communication technologies, and in particular, to a communication method and device.

### BACKGROUND

In Uu interface communication, when a user equipment (user equipment, UE) fails in a radio resource control (radio resource control, RRC) connected (connected) mode, RRC resume (resume) may be performed, or after the UE is released to an RRC inactive (inactive) mode, RRC reestablishment (reestablishment) may be performed. In a relay (relay) communication scenario, a remote (remote) UE may also perform RRC resume or reestablishment via a relay UE.

An RRC reestablishment process is used as an example. Currently, when initiating the RRC reestablishment, the remote UE may send an RRC reestablishment request to a base station via the relay UE. After receiving the RRC reestablishment request, the base station sends an RRC reestablishment message to the remote UE via the relay UE. The RRC reestablishment message may carry information used to configure a sidelink relay adaptation protocol (sidelink relay adaptation protocol, SRAP) entity of the remote UE. The RRC reestablishment message sent by the relay UE to the remote UE carries an SRAP header (header). When the remote UE fails in an RRC connected mode or is released to an RRC inactive mode, the SRAP entity may be released. As a result, because the remote UE cannot identify the RRC reestablishment message carrying the SRAP header, the remote UE may discard the RRC reestablishment message, resulting in a failure in the reestablishment of the remote UE. In addition, because the remote UE cannot obtain the information that is used to configure the SRAP entity and that is carried in the RRC reestablishment message, the SRAP entity cannot be configured. The same is true for an RRC resume process.

It can be learned that a success rate of the RRC reestablishment or resume of the remote UE is low currently.

### SUMMARY

Embodiments of this application provide a communication method and device, to improve a success rate of RRC reestablishment or RRC resume of a remote UE.

According to a first aspect, a first communication method is provided. The method may be performed by a terminal device, may be performed by another device including functions of the terminal device, or may be performed by a chip system (or a chip) or another functional module. The chip system or the functional module can implement the functions of the terminal device, and the chip system or the functional module is, for example, disposed in the terminal device. The terminal device is, for example, a remote terminal device. The method includes: receiving a first data packet from a relay terminal device by using an SRB 1 of the remote terminal device, where the first data packet includes a first message and an SRAP header, and the first message is an RRC connection resume message or an RRC reestablishment message; removing the SRAP header via an SRAP entity to obtain configuration information, where the SRAP entity is determined before the SRAP header is removed; and configuring the SRAP entity based on the configuration information.

In this embodiment of this application, the remote terminal device may predetermine the SRAP entity. In this way, after receiving the first data packet carrying the SRAP header, the remote terminal device can remove the SRAP header via the SRAP entity, so that the RRC reestablishment message or the RRC connection resume message can be obtained, to improve a success rate of RRC reestablishment or RRC resume of the remote terminal device. In addition, the remote terminal device can also configure the SRAP entity based on the configuration information included in the RRC reestablishment message or the RRC connection resume message, so that a message carrying the SRAP header can be normally identified in a subsequent communication process.

In an optional implementation, the method further includes: establishing the SRAP entity before the SRAP header is removed. For example, when the remote terminal device fails in an RRC connected mode, or when the remote terminal device is released to an RRC inactive mode, the SRAP entity may be released. Therefore, the remote terminal device may establish the SRAP entity again. For example, the SRAP entity may be established after a remote UE sends an RRC resume request or an RRC reestablishment request, may be established when a remote UE is ready to send an RRC resume request or an RRC reestablishment request, may be established when a remote UE is ready to initiate RRC connection resume or RRC connection reestablishment, may be established when or after a timer T301 or a timer T311 is started, may be established when or after a timer T319 or a timer T319a is started, or may be established when a remote UE initiates RRC connection resume or RRC connection reestablishment.

In an optional implementation, the establishing the SRAP entity before the SRAP header is removed includes: before the SRAP header is removed, establishing the SRAP entity based on a default configuration. If the remote terminal device has not obtained the configuration information of the SRAP entity, the remote terminal device may establish the SRAP entity based on the default configuration.

In an optional implementation, the SRAP entity is not released when the remote terminal device is released to the RRC inactive mode. For example, when the remote terminal device is released to the RRC inactive mode, or when the remote terminal device fails in the RRC connected mode, the SRAP entity is not released. In this case, the remote terminal device may use the SRAP entity that is not released, and does not need to establish the SRAP entity again. In addition, the remote terminal device does not need to perform other configuration on the SRAP entity that is not released, and implementation is simple.

In an optional implementation, the method further includes: before the SRAP header is removed, reconfiguring the SRAP entity that is not released. For example, when the remote terminal device is released to the RRC inactive mode, or when the remote terminal device fails in the RRC connected mode, the SRAP entity is not released. In this case, the remote terminal device may use the SRAP entity that is not released. The remote terminal device may reconfigure the SRAP entity that is not released, to process the SRAP header of the first data packet based on the reconfigured SRAP entity. For example, the remote terminal device may reconfigure the SRAP entity based on the default configuration. This is not specifically limited.

In an optional implementation, the SRAP entity does not include a first field (in other words, the SRAP entity does not include configuration information of the first field); or the SRAP entity includes a first field (in other words, the SRAP entity includes configuration information of the first field). The first field is an undefined field, or the first field carries a default value. The first field is used to carry an identifier of the remote terminal device. A normal SRAP entity generally includes the configuration information of the first field, to carry the identifier of the remote terminal device. After receiving a data packet, the SRAP entity may compare an identifier of the remote terminal device that is carried in the data packet with the identifier of the remote terminal device that is carried in the SRAP entity. If the two identifiers are consistent, the SRAP entity may remove an SRAP header of the data packet, and submit the data packet to an upper layer of the SRAP entity. If the two identifiers are inconsistent, the SRAP entity may discard the data packet. In this embodiment of this application, the remote terminal device has not obtained the identifier of the remote terminal device. Therefore, the SRAP entity may not include the configuration information of the first field. Alternatively, although the SRAP entity includes the configuration information of the first field, the first field is undefined, or the first field carries the default value. In other words, the SRAP entity currently does not carry the identifier of the remote terminal device.

In an optional implementation, the SRAP header includes a first identifier, and the first identifier is the identifier of the remote terminal device. Alternatively, the SRAP header does not include the identifier of the remote terminal device. A message sent by an access network device to the relay terminal device includes the first identifier, and the relay terminal device may not process the first identifier. In this case, the SRAP header of the first data packet may still include the first identifier. Alternatively, the relay terminal device may remove the first identifier in the SRAP header, and then send the first data packet to the remote terminal device. In this case, the SRAP header received by the remote terminal device does not include the first identifier. The SRAP entity determined by the remote terminal device may not identify the identifier of the remote terminal device. The SRAP entity may remove the SRAP header regardless of whether the SRAP header includes the first identifier. It can be learned that the remote terminal device does not discard the first data packet via the SRAP entity.

In an optional implementation, the configuring the SRAP entity based on the configuration information includes: configuring the SRAP entity based on a second identifier included in the configuration information, where the second identifier is the identifier of the remote terminal device. After removing the SRAP header of the first data packet, the SRAP entity of the remote terminal device may obtain the configuration information included in the first data packet, and the remote terminal device may configure the SRAP entity based on the configuration information. For example, if the configuration information includes the second identifier, the remote terminal device may add the second identifier to the SRAP entity. Therefore, if subsequently receiving a data packet, the SRAP entity may remove an SRAP header of the data packet based on the second identifier, or may discard the data packet. The second identifier and the first identifier are, for example, a same identifier, or may be different identifiers.

According to a second aspect, a second communication method is provided. The method may be performed by a terminal device, may be performed by another device including functions of the terminal device, or may be performed by a chip system or another functional module. The chip system or the functional module can implement the functions of the terminal device, and the chip system or the functional module is, for example, disposed in the terminal device. Optionally, the terminal device is, for example, a remote terminal device. The method includes: receiving a first data packet from a relay terminal device by using an SRB 1 of the remote terminal device, where the first data packet includes a first message, the first data packet does not include an SRAP header, and the first message is an RRC connection resume message or an RRC reestablishment message; and configuring an SRAP entity based on configuration information included in the first message.

For example, the relay terminal device may remove the SRAP header of the first data packet, and then send, to the remote terminal device, the first data packet from which the SRAP header is removed. In this case, the first data packet received by the remote terminal device does not include the SRAP header. In this case, the remote terminal device normally processes the first data packet. For example, the remote terminal device may obtain the configuration information included in the first data packet, and configure the SRAP entity based on the configuration information, so that the SRAP entity can normally filter a data packet. In this embodiment of this application, the remote terminal device also does not need to predetermine the SRAP entity. Therefore, working logic of the remote terminal device is slightly modified, and implementation is simple.

According to a third aspect, a third communication method is provided. The method may be performed by a terminal device, may be performed by another device including functions of the terminal device, or may be performed by a chip system or another functional module. The chip system or the functional module can implement the functions of the terminal device, and the chip system or the functional module is, for example, disposed in the terminal device. Optionally, the terminal device is, for example, a relay terminal device. The method includes: obtaining a second data packet via an SRAP entity, where the second data packet includes an SRAP header and a first message, the SRAP header includes a first identifier of a remote terminal device, and the first message is an RRC connection resume message or an RRC reestablishment message; processing the SRAP header via the SRAP entity to obtain a first data packet, where the first data packet does not include the first identifier; and sending the first data packet to the remote terminal device by using an SRB 1 of the remote terminal device.

The second data packet is, for example, from an access network device. The relay terminal device may process the SRAP header, so that the first data packet does not include the first identifier. After receiving the first data packet, the remote terminal device can process the first data packet without discarding the first data packet, so that the remote terminal device can obtain the RRC reestablishment message or the RRC connection resume message, to improve a success rate of RRC reestablishment or RRC resume of the remote terminal device. In addition, the remote terminal device can also configure the SRAP entity based on configuration information included in the RRC reestablishment message or the RRC connection resume message, so that a message carrying the SRAP header can be normally identified in a subsequent communication process.

In an optional implementation, the processing the SRAP header via the SRAP entity to obtain a first data packet includes: removing the SRAP header via the SRAP entity to obtain the first data packet; or processing the first identifier in the SRAP header via the SRAP entity to obtain the first data packet. The relay terminal device may remove the SRAP header. In this way, the remote terminal device also does not need to preestablish the SRAP entity. Therefore, this helps simplify an operation process of the remote terminal device. Alternatively, the relay terminal device may process the first identifier in the SRAP header, and the SRAP entity of the remote terminal device does not need to identify an identifier of the remote terminal device in the SRAP header, but removes the SRAP header. According to the technical solutions in this embodiment of this application, a probability that the remote terminal device discards the first data packet may be reduced, and the success rate of the RRC reestablishment or the RRC resume of the remote terminal device is improved.

In an optional implementation, the processing the first identifier in the SRAP header via the SRAP entity includes: updating the first identifier via the SRAP entity; or removing the first identifier via the SRAP entity. For example, the relay terminal device may update the first identifier in the SRAP header to a first value. The first value is, for example, a default value. Alternatively, the relay terminal device may remove the first identifier from the SRAP header. Alternatively, the relay terminal device may process the first identifier in another manner, provided that the SRAP header no longer includes the first identifier.

In an optional implementation, the method further includes: determining that the first message is a 1^{st} downlink message sent to the remote terminal device on the SRB 1; or determining that the second data packet includes indication information, where the indication information indicates to process the SRAP header. If determining that the first message is the 1^{st} downlink message sent to the remote terminal device on the SRB 1, or the second data packet includes the indication information, the relay terminal device processes the SRAP header based on the foregoing manner.

According to a fourth aspect, a fourth communication method is provided. The method may be performed by a terminal device, may be performed by another device including functions of the terminal device, or may be performed by a chip system or another functional module. The chip system or the functional module can implement the functions of the terminal device, and the chip system or the functional module is, for example, disposed in the terminal device. Optionally, the terminal device is, for example, a remote terminal device. The method includes: storing a first identifier of the remote terminal device, where the first identifier is obtained by the remote terminal device in an RRC connected mode, and the first identifier is an identifier applied by an SRAP entity of the remote terminal device.

In this embodiment of this application, the remote terminal device may store the first identifier, or the remote terminal device does not release the first identifier, so that the SRAP entity can be obtained by using the first identifier. Alternatively, an access network device may preferentially allocate the first identifier to the remote terminal device, so that the SRAP entity of the remote terminal device can identify a first message from the access network device, to improve a success rate of RRC reestablishment or RRC resume of the remote terminal device.

In an optional implementation, the method further includes: sending a second message to a relay terminal device, where the second message includes the first identifier, and the second message is an RRC connection resume request message or an RRC reestablishment request message. Since the remote terminal device stores the first identifier, the first identifier may be carried when the second message is sent to the relay terminal device.

In an optional implementation, the method further includes: when an RRC connection resume process or an RRC reestablishment process is initiated, establishing the SRAP entity.

In an optional implementation, the establishing the SRAP entity includes: establishing the SRAP entity based on a default configuration.

In an optional implementation, the SRAP entity is not released when the remote terminal device is released to an RRC inactive mode.

In an optional implementation, the method further includes: when the RRC connection resume process or the RRC reestablishment process is initiated, reconfiguring the SRAP entity that is not released.

In an optional implementation, the method further includes: receiving a first data packet from the relay terminal device by using an SRB 1 of the remote terminal device, where the first data packet includes a first message and an SRAP header, the SRAP header includes the first identifier, and the first message is the RRC connection resume message or the RRC reestablishment message; identifying the first identifier via the SRAP entity, and removing the SRAP header to obtain configuration information; and configuring the SRAP entity based on the configuration information. In this embodiment of this application, regardless of a manner in which the remote terminal device determines the SRAP entity, the SRAP entity may carry the first identifier. Therefore, the SRAP entity can normally filter a data packet. When allocating an identifier to the remote terminal device, the access network device may preferentially allocate the first identifier. If the access network device continues to allocate the first identifier to the remote terminal device, an SRAP header carried in a data packet sent by the access network device also includes the first identifier, and the remote terminal device can identify the first data packet, so that the configuration information included in the first data packet can be obtained.

In an optional implementation, the method further includes: receiving the first data packet from the relay terminal device by using an SRBO of the remote terminal device, where the first data packet includes an RRC setup message, and the first data packet does not include the SRAP header; and configuring the SRAP entity based on configuration information included in the RRC setup message. If the access network device does not allocate the first identifier to the remote terminal device, but allocates another identifier to the remote terminal device, the access network device may perform an RRC setup procedure. In the RRC setup procedure, the access network device sends a message by using the SRBO, and correspondingly, the relay terminal device also sends the first data packet to the remote terminal device by using the SRBO. A message that the SRBO carries does not include the SRAP header, so that the remote terminal device can obtain the configuration information included in the RRC setup message, to configure the SRAP entity.

For technical effects brought by some optional implementations of the fourth aspect, refer to descriptions of technical effects of related implementations of any one of the foregoing aspects.

According to a fifth aspect, a fifth communication method is provided. The method may be performed by an access network device, may be performed by another device including functions of the access network device, or may be performed by a chip system or another functional module. The chip system or the functional module can implement the functions of the access network device, and the chip system or the functional module is, for example, disposed in the access network device. Optionally, the access network device is, for example, a base station. The method includes: receiving a second identifier of a remote terminal device from a relay terminal device; determining a first identifier of the remote terminal device based on the second identifier; and sending a first message to the relay terminal device, where the first message includes a third identifier, the first identifier is the same as or different from the third identifier, and the first message is an RRC connection resume message, an RRC reestablishment message, or an RRC setup message.

In an optional implementation, the method further includes: The access network device preferentially allocates the first identifier to the remote terminal device.

In an optional implementation, that the access network device preferentially allocates the first identifier to the remote terminal device includes the following cases. If the first identifier does not conflict with an identifier of another remote terminal device connected to the relay terminal device, the first identifier is the same as the third identifier, and the first message is the RRC connection resume message or the RRC reestablishment message. Alternatively, if the first identifier conflicts with an identifier of another remote terminal device connected to the relay terminal device, the first identifier is different from the third identifier, and the first message is the RRC setup message.

In an optional implementation, if the first message is the RRC connection resume message or the RRC reestablishment message, the first message is sent by using an SRB1. Alternatively, if the first message is the RRC setup message, the first message is sent by using an SRBO.

For technical effects brought by the fifth aspect or the optional implementations of the fifth aspect, refer to descriptions of technical effects of related implementations of the fourth aspect.

According to a sixth aspect, a communication apparatus is provided. The communication apparatus may be the remote terminal device according to any one of the first aspect to the fifth aspect. The communication apparatus has functions of the remote terminal device. The communication apparatus is, for example, a remote terminal device, or a large device including the remote terminal device, or a functional module in a remote terminal device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the transceiver unit is configured to receive a first data packet from a relay terminal device by using an SRB 1 of the communication apparatus, where the first data packet includes a first message and an SRAP header, and the first message is an RRC connection resume message or an RRC reestablishment message. The processing unit is configured to remove the SRAP header via an SRAP entity to obtain configuration information, where the SRAP entity is determined before the SRAP header is removed. The processing unit is further configured to configure the SRAP entity based on the configuration information.

In an optional implementation, the transceiver unit is configured to receive a first data packet from a relay terminal device by using an SRB 1 of the communication apparatus, where the first data packet includes a first message, the first data packet does not include an SRAP header, and the first message is an RRC connection resume message or an RRC reestablishment message. The processing unit is configured to configure an SRAP entity based on configuration information included in the first message.

In an optional implementation, the processing unit is configured to store a first identifier of the remote terminal device. The first identifier is obtained by the remote terminal device in an RRC connected mode, and the first identifier is an identifier applied by the SRAP entity of the remote terminal device.

In an optional implementation, the communication apparatus further includes a storage unit (sometimes also referred to as a storage module). The processing unit is configured to be coupled to the storage unit, and execute a program or instructions in the storage unit, to enable the communication apparatus to perform the functions of the remote terminal device according to any one of the first aspect to the fifth aspect.

According to a seventh aspect, a communication apparatus is provided. The communication apparatus may be the relay terminal device according to any one of the first aspect to the fifth aspect. The communication apparatus has functions of the relay terminal device. The communication apparatus is, for example, a relay terminal device, or a large device including the relay terminal device, or a functional module in a relay terminal device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For implementations of the transceiver unit, refer to descriptions of the sixth aspect.

In an optional implementation, the processing unit is configured to obtain a second data packet via an SRAP entity, where the second data packet includes an SRAP header and a first message, the SRAP header includes a first identifier of a remote terminal device, and the first message is an RRC connection resume message or an RRC reestablishment message. The processing unit is further configured to process the SRAP header via the SRAP entity to obtain a first data packet, where the first data packet does not include the first identifier. The transceiver unit is further configured to send the first data packet to the remote terminal device by using an SRB 1 of the remote terminal device.

In an optional implementation, the communication apparatus further includes a storage unit (sometimes also referred to as a storage module). The processing unit is configured to be coupled to the storage unit, and execute a program or instructions in the storage unit, to enable the communication apparatus to perform the functions of the relay terminal device according to any one of the first aspect to the fifth aspect.

According to an eighth aspect, a communication apparatus is provided. The communication apparatus may be the access network device according to any one of the first aspect to the fifth aspect. The communication apparatus has functions of the access network device. The communication apparatus is, for example, an access network device, or a large device including the access network device, or a functional module in the access network device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For implementations of the transceiver unit, refer to descriptions of the sixth aspect.

In an optional implementation, the transceiver unit is configured to receive a second identifier of a remote terminal device from a relay terminal device. The processing unit is configured to determine a first identifier of the remote terminal device based on the second identifier. The transceiver unit is further configured to send a first message to the relay terminal device, where the first message includes a third identifier, the first identifier is the same as or different from the third identifier, and the first message is an RRC connection resume message, an RRC reestablishment message, or an RRC setup message.

In an optional implementation, the communication apparatus further includes a storage unit (sometimes also referred to as a storage module). The processing unit is configured to be coupled to the storage unit, and execute a program or instructions in the storage unit, to enable communication apparatus to perform the functions of the access network device according to any one of the first aspect to the fifth aspect.

According to a ninth aspect, a communication system is provided. The communication system includes the communication apparatus according to the sixth aspect and the communication apparatus according to the seventh aspect.

In an optional implementation, the communication system further includes the communication apparatus according to the eighth aspect.

According to a tenth aspect, a computer-readable storage medium is provided. The computer-readable storage medium is configured to store a computer program or instructions. When the computer program or the instructions are run, the methods performed by the access network device, the remote terminal device, or the relay terminal device according to the foregoing aspects are implemented.

According to an eleventh aspect, a computer program product including instructions is provided. When the computer program product is run on a computer, the methods according to the foregoing aspects are implemented.

According to a twelfth aspect, a chip system is provided. The chip system includes a processor and an interface. The processor is configured to invoke instructions from the interface and run the instructions, so that the chip system implements the methods according to the foregoing aspects.

### BRIEF DESCRIPTION OF DRAWINGS

FIG. 1A is a diagram of a protocol stack of each device in a relay scenario;
FIG. 1B and FIG. 1C are diagrams of two application scenarios according to an embodiment of this application;
FIG. 2 to FIG. 5 are flowcharts of several communication methods according to an embodiment of this application;
FIG. 6 is a diagram of an apparatus according to an embodiment of this application; and
FIG. 7 is a diagram of another apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

The following describes some terms or concepts in embodiments of this application, to facilitate understanding of a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios. For example, the terminal device includes but is not limited to terminal devices in scenarios such as cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), telemedicine (remote medical), a smart grid (smart grid), smart furniture, smart office, a smart wearable, smart transportation, a smart city (smart city), an uncrewed aerial vehicle, and a robot. The terminal device may be sometimes referred to as a user equipment (user equipment, UE), a terminal, an access station, a UE station, a remote station, a wireless communication device, a user apparatus, or the like. For ease of description, an example in which the terminal device is a UE is used for description in embodiments of this application.

A network device in embodiments of this application may include, for example, an access network device and/or a core network device. The access network device is a device having a wireless transceiver function, and is configured to communicate with the terminal device. The access network device includes but is not limited to a base station (a base transceiver station (base transceiver station, BTS), a NodeB, an eNodeB/eNB, or a gNodeB/gNB), a transmission reception point (transmission reception point, TRP), or a subsequent evolved base station in the 3rd generation partnership project (3rd generation partnership project, 3GPP), an access node in a wireless fidelity (wireless fidelity, Wi-Fi) system, a wireless relay node, a wireless backhaul node, or the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller in a cloud radio access network (cloud radio access network, CRAN) scenario, a central unit (central unit, CU), and/or a distributed unit (distributed unit, DU). Alternatively, the access network device may be a server or the like. For example, an access network device in a vehicle-to-everything (vehicle-to-everything, V2X) technology may be a road side unit (road side unit, RSU). The following uses an example in which the access network device is a base station for description. The base station may communicate with the terminal device, or may communicate with the terminal device via a relay station. The terminal device may communicate with the plurality of base stations in different access technologies. The core network device is configured to implement functions such as mobility management, data processing, session management, and policy and charging. Names of devices that implement core network functions in systems of different access technologies may be different. This is not limited in embodiments this application. A 5G system is used as an example. The core network device includes an access and mobility management function (access and mobility management function, AMF), a session management function (session management function, SMF), a policy control function (policy control function, PCF), a user plane function (user plane function, UPF), and the like.

In embodiments of this application, a communication apparatus configured to implement a function of the network device may be a network device, or may be an apparatus that can support the network device in implementing the function, for example, a chip system. The apparatus may be installed in the network device. In the technical solutions provided in embodiments of this application, an example in which the apparatus configured to implement the function of the network device is a network device is used to describe the technical solutions provided in embodiments of this application.

APC5 reference point (or a PC5 interface) is a reference point (or an interface) between UEs.

A Uu reference point (or a Uu interface) is a reference point (or an interface) between the UE and a radio access network (for example, a next generation (next generation, NG)-radio access network (radio access network, RAN), an evolved universal mobile telecommunications system (universal mobile telecommunications system, UMTS) terrestrial radio access network (evolved UMTS terrestrial radio access network, E-UTRAN), or the like).

In embodiments of this application, unless otherwise specified, a quantity of nouns represents "a singular noun or plural nouns", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. A character "/" generally indicates an "or" relationship between the associated objects. For example, A/B indicates A or B. "At least one of the following items (pieces)" or a similar expression thereof refers to any combination of these items, including any combination of singular items (pieces) or plural items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, sequences, time sequences, priorities, importance, or the like of the plurality of objects. For example, a first data packet and a second data packet may be a same data packet, or may be different data packets. In addition, such names do not indicate that the two data packets are different in content, sizes, corresponding receive and transmit ends, sending sequences, priorities, importance, or the like. In addition, step numbers in embodiments described in this application are merely used to distinguish between different steps, but are not used to limit a sequence of the steps. For example, S201 may be performed before S202, may be performed after S202, or may be performed simultaneously with S202.

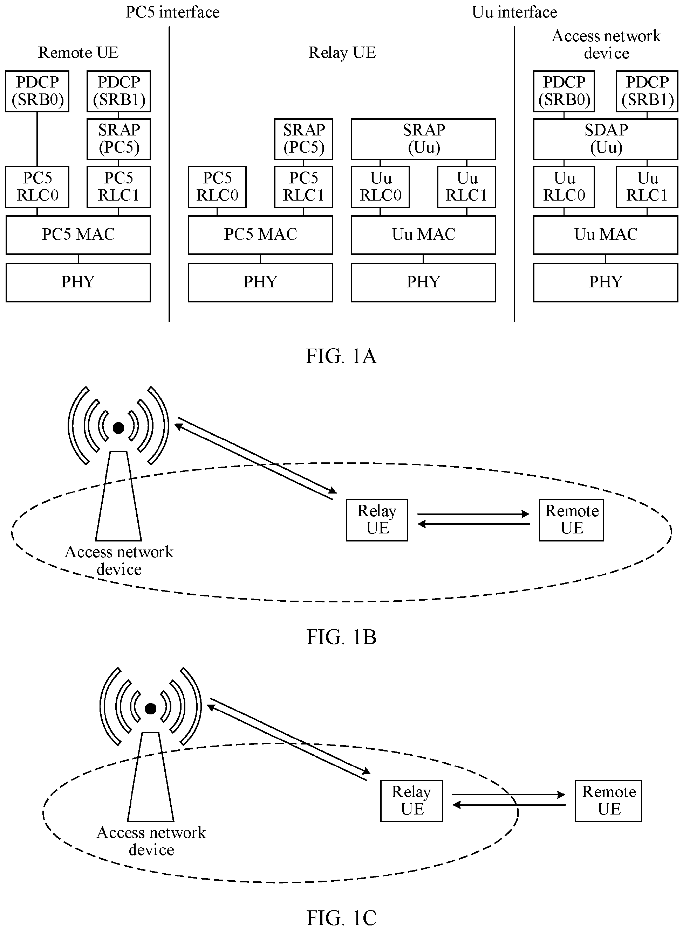

FIG. 1A is a diagram of protocol stacks of a remote UE, a relay UE, and an access network device in a relay scenario. The remote UE includes a protocol stack corresponding to a PC5 interface, for example, includes a packet data convergence protocol (packet data convergence protocol, PDCP) entity, an SRAP entity, a radio link control (radio link control, RLC) entity, a media access control (media access control, MAC) entity, and a physical layer (PHY) entity. There are two PDCP entities, and the two entities respectively correspond to a signaling radio bearer (signaling radio bearer, SRB) 0 and an SRB1 of the remote UE on a Uu interface. If there are more SRBs, there may be more PDCP entities. The SRAP entity corresponds to an SRB (for example, the SRB1) other than the SRBO (or the SRAP entity for the PC5 interface may also correspond to the SRBO, but does not process an SRBO message), or may correspond to a data radio bearer (data radio bearer, DRB) or the like. There are two RLC entities, and the two entities respectively correspond to the SRBO and the SRB1. If there are more SRBs, there may be more RLC entities. The relay UE includes both the protocol stack corresponding to the PC5 interface and a protocol stack corresponding to the Uu interface. The protocol stack corresponding to the PC5 interface includes the SRAP entity corresponding to the SRB (which may further correspond to the DRB) other than the SRBO (or the SRAP entity for the PC5 interface may also correspond to the SRBO, but does not process the SRBO message), the RLC entities respectively corresponding to the SRBO and the SRB1, the MAC entity, and the PHY entity. The protocol stack corresponding to the Uu interface includes an SRAP entity corresponding to each SRB (which may further correspond to the DRB), the two RLC entities respectively corresponding to the SRBO and the SRB1, the MAC entity, and the PHY entity. The access network device includes the protocol stack corresponding to the Uu interface, for example, includes the two PDCP entities respectively corresponding to the SRBO and the SRB1, the SRAP entity corresponding to each SRB (which may further correspond to the DRB), the two RLC entities respectively corresponding to the SRBO and the SRB1, the MAC entity, and the PHY entity.

An example in which the remote UE performs RRC reestablishment is used. When the remote UE performs the RRC reestablishment, the remote UE sends an RRC reestablishment request to the relay UE by using the SRBO. It can be learned from FIG. 1A that the SRBO of the remote UE does not correspond to the SRAP entity, or the SRAP entity of the remote UE does not process the SRBO message (that is, a message whose transmission is performed on the SRBO). Therefore, an SRAP header does not need to be added to the RRC reestablishment request. After receiving the RRC reestablishment request, the relay UE sends a layer 2 (L2) identity number (ID) of the remote UE to the access network device. The access network device may allocate a local (local) ID to the remote UE based on the L2 ID, and the access network device sends the local ID to the relay UE. The relay UE receives configuration information of the SRAP entity from the access network device, where the configuration information includes the local ID of the remote UE. Based on the configuration information, a Uu SRAP entity of the relay UE adds the SRAP header to the RRC reestablishment request from the remote UE, adds the local ID to the SRAP header, and then sends the RRC reestablishment request to which the SRAP header is added to the access network device by using an RLC bearer/channel of the Uu interface. After receiving the RRC reestablishment request from the remote UE, the access network device sends an RRC reestablishment message for the remote UE to the relay UE. The RRC reestablishment message carries the SRAP header. The relay UE may determine, by using a local ID in a header of a received SRAP data packet, that the data packet is forwarded to the corresponding remote UE. The relay UE may send the RRC reestablishment message to the remote UE by using a PC5 RLC bearer/channel carrying the SRB1 of the remote UE.

However, when the remote UE fails in an RRC connected mode, the SRAP entity may have been released. Consequently, after receiving the RRC reestablishment message, the remote UE discards the RRC reestablishment message because the SRAP header cannot be identified, and the reestablishment of the remote UE fails. In addition, the RRC reestablishment message further carries information used to configure the SRAP entity of the remote UE. Because the remote UE discards the RRC reestablishment message, naturally the remote UE cannot obtain the information, and cannot configure the SRAP entity. This is similar for an RRC resume process.

In view of this, the technical solutions in embodiments of this application are provided. In embodiments of this application, the remote UE may predetermine the SRAP entity. In this way, after receiving a first data packet carrying the SRAP header, the remote UE can remove the SRAP header via the SRAP entity, so that the RRC reestablishment message and an RRC connection resume message can be obtained, to improve a success rate of the RRC reestablishment or RRC resume of the remote UE. In addition, the remote UE can also configure the SRAP entity based on configuration information included in the RRC reestablishment message or the RRC connection resume message, so that a message carrying the SRAP header can be normally identified in a subsequent communication process.

The technical solutions provided in embodiments of this application may be applied to a 4th generation mobile communication technology (the 4th generation, 4G) system, for example, a long term evolution (long term evolution, LTE) system, may be applied to a 5G system, for example, a new radio (new radio, NR) system, or may be applied to a next generation mobile communication system or another similar communication system. This is not specifically limited.

This application relates to a UE-to-network relay (UE-to-network relay) mechanism, and this mechanism may be used to improve coverage of a cellular network. FIG. 1B and FIG. 1C are diagrams of two application scenarios according to an embodiment of this application. A relay UE is located in coverage of an access network device of a cellular network. In other words, the relay UE can directly communicate with the access network device via a Uu interface. A remote UE may communicate with the relay UE via a PC5 interface, and send data of the remote UE to the relay UE, and then the relay UE forwards the data of the remote UE to the access network device via the Uu interface. Alternatively, data that is from a core network and that is to be sent to a remote UE arrives at an access network device, the access network device sends the data to a relay UE via a Uu interface, and then the relay UE forwards the data to the remote UE via a PC5 interface. In FIG. 1B, the remote UE is also located in the coverage of the access network device. In FIG. 1C, the remote UE is not located in the coverage of the access network device.

To better describe embodiments of this application, the following describes methods provided in embodiments of this application with reference to the accompanying drawings. For ease of description, in embodiments of this application, an example in which a remote terminal device is a remote UE and a relay terminal device is a relay UE is used. The methods provided in embodiments of this application may be applied to a network architecture shown in FIG. 1B or FIG. 1C. For example, the remote UE in embodiments of this application is the remote UE in FIG. 1B or FIG. 1C, the access network device in embodiments of this application is the access network device in FIG. 1B or FIG. 1C, and the relay UE in embodiments of this application is the relay UE in FIG. 1B or FIG. 1C.

In embodiments of this application, an "entity" may alternatively be replaced with a "layer". For example, an "SRAP entity" may also be referred to as an "SRAP layer", and a "PDCP entity" may also be referred to as a "PDCP layer".

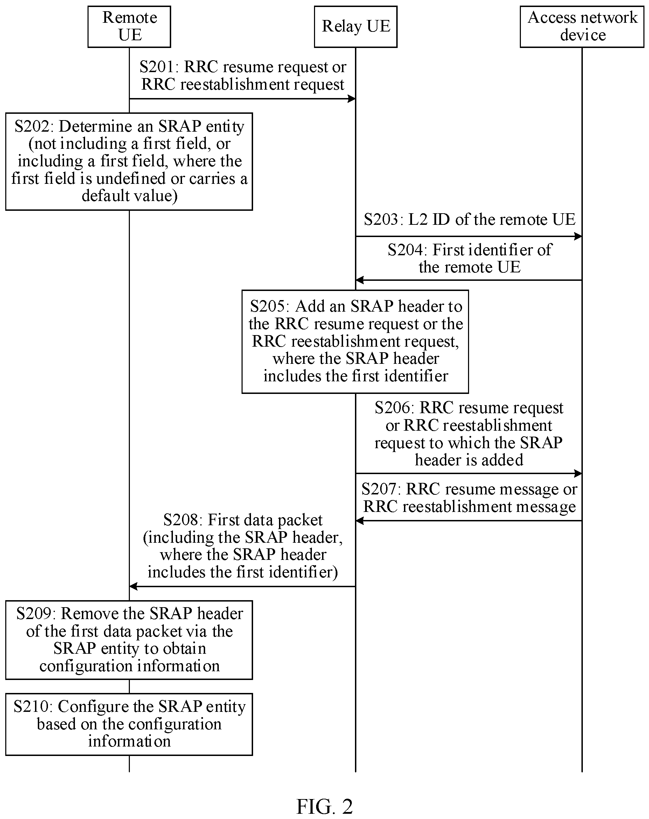

To resolve technical problems to be resolved in this application, embodiments of this application provide a plurality of methods. FIG. 2 is a flowchart of a first communication method according to an embodiment of this application.

S201: A remote UE sends a second message to a relay UE. Correspondingly, the relay UE receives the second message from the remote UE. The second message is a message sent by the remote UE to an access network device via the relay UE. In this embodiment of this application, an example in which the remote UE performs RRC reestablishment or RRC connection resume (or RRC resume for short) is used. For example, if the remote UE performs the RRC reestablishment, the second message is an RRC reestablishment request (or referred to as an RRC connection reestablishment request). Alternatively, if the remote UE performs the RRC resume, the second message is an RRC resume request (or referred to as an RRC connection resume request).

For example, the second message includes information such as a physical cell identifier (physical cell identifier, PCI) and a cell radio network temporary identifier (cell radio network temporary identity, C-RNTI) of the remote UE.

The second message is sent by using an SRBO of the remote UE. When the relay UE receives the second message, there is no SRAP header by default. Therefore, when sending the second message, the remote UE does not need to add the SRAP header to the second message.

S202: The remote UE determines an SRAP entity. Alternatively, the remote UE obtains an SRAP entity.

If the remote UE has released the SRAP entity before performing the RRC reestablishment or the RRC resume, the remote UE may establish the SRAP entity. For example, when the remote UE fails in an RRC connected mode, or when the remote UE is released to an RRC inactive mode, the SRAP entity may be released. Optionally, the remote UE may establish the SRAP entity based on a default (default) configuration, or the remote UE may establish the SRAP entity based on no configuration. For example, the remote UE establishes an SRAP entity having an SRAP function (a header removal function).

Regardless of how the remote UE establishes the SRAP entity, the SRAP entity may not include a first field (field), in other words, the SRAP entity does not include configuration information of a first field (in other words, configuration information of the SRAP entity does not include configuration information of a first field). The first field is an identifier used to carry the remote UE. The identifier is, for example, a local ID, or may be an identifier of another type. If the remote UE normally establishes the SRAP entity, the SRAP entity includes the configuration information of the first field, and the first field carries the identifier of the remote UE. However, in this embodiment of this application, the remote UE establishes the SRAP entity based on the default configuration or based on no configuration. Even the default configuration may not include the identifier of the remote UE. Therefore, the SRAP entity may not include the configuration information of the first field, and then the SRAP entity does not have a configuration of the identifier of the remote UE.

Alternatively, regardless of how the remote UE establishes the SRAP entity, the SRAP entity may include the configuration information of the first field, but the first field may be undefined (undefined). For example, the first field does not carry the identifier of the remote UE. Alternatively, the first field may carry a default value. The default value is, for example, "0", or another value, but the default value is not the identifier of the remote UE. It can be learned that the SRAP entity established by the remote UE does not have the configuration of the identifier of the remote UE.

It is also possible that the remote UE does not release the SRAP entity before performing the RRC reestablishment or the RRC resume. For example, when the remote UE fails in the RRC connected mode, or when the remote UE is released to the RRC inactive mode, the SRAP entity is not released. Optionally, the remote UE may reconfigure the SRAP entity. For example, the remote UE may reconfigure the SRAP entity based on the default configuration. The reconfigured SRAP entity may not include the configuration information of the first field, or includes the configuration information of the first field, but the first field is undefined or carries the default value. For details, refer to the foregoing descriptions.

Alternatively, when the remote UE fails in the RRC connected mode, or when the remote UE is released to the RRC inactive mode, although the SRAP entity is not released, a configuration of the SRAP entity is released, so that the SRAP entity may not include the configuration information of the first field, or includes the configuration information of the first field, but the first field is undefined or carries the default value. Therefore, the remote UE may not process the SRAP entity. In other words, 5202 does not need to be performed. Therefore, S202 is an optional step.

If S202 is performed, 5202 may be performed before S201, may be performed after S201, or may be performed simultaneously with S201. This is not specifically limited. For example, the SRAP entity may be established after the remote UE sends the RRC resume request or the RRC reestablishment request, may be established when the remote UE is ready to send the RRC resume request or the RRC reestablishment request, may be established when the remote UE is ready to initiate the RRC connection resume or the RRC connection reestablishment, may be established when or after a timer T301 or a timer T311 is started, may be established when or after a timer T319 or a timer T319a is started, or may be established when the remote UE initiates the RRC connection resume or the RRC connection reestablishment.

S203: The relay UE sends information about the remote UE to the access network device. Correspondingly, the access network device receives the information about the remote UE from the relay UE. The information about the remote UE may include an L2 ID of the remote UE, and the L2 ID may indicate the remote UE to perform access via the relay UE.

For example, the relay UE sends sidelink UE information (sidelink UE information, SUI) to the access network device. The SUI includes the information about the remote UE.

S204: The access network device sends a first identifier of the remote UE to the relay UE. Correspondingly, the relay UE receives the first identifier from the access network device. The first identifier is, for example, the local ID of the remote UE.

For example, the access network device may allocate the first identifier to the remote UE, and send SRAP configuration information to the relay UE. The SRAP configuration information may include the first identifier of the remote UE. When the relay UE performs relaying (including sending or receiving) of data between the remote UE and the access network device, the SRAP entity may determine a destination device based on the SRAP configuration information and a source of a data packet. For example, for uplink data transmission, the SRAP entity may determine, based on a PC5 RLC bearer or channel on which a received data packet comes from the remote UE, to add the local ID and/or RB information to the SRAP header, and determine RLC bearer information on a Uu interface based on the local ID in the SRAP header from the remote UE. For another example, for downlink data transmission, the SRAP entity may determine, based on a local ID in a header of a data packet received from the access network device, a remote UE to which the data packet should be transmitted.

S205: The relay UE adds the SRAP header to the second message.

The relay UE may add the SRAP header to the second message based on the received SRAP configuration information. The SRAP header includes the first identifier. Optionally, the SRAP header further includes information about an SRB of the remote UE used to send the second message, for example, includes an identifier of the SRBO of the remote UE, or includes information indicating that an RB ID of the remote UE is 0.

S206: The relay UE sends, to the access network device, the second message to which the SRAP header is added. Correspondingly, the access network device receives, from the relay UE, the second message to which the SRAP header is added. For example, the relay UE sends, to the access network device by transmitting an RLC bearer corresponding to the SRBO of the remote UE, the second message to which the SRAP header is added. The second message is an SRBO message, for example, the RRC resume request or the RRC reestablishment request.

S207: The access network device sends a first message to the relay UE. Correspondingly, the relay UE receives the first message from the access network device. The first message is sent by the access network device to the remote UE via the relay UE in response to the second message sent by the remote UE via the relay UE. The first message is an SRB1 message of the remote UE. If the second message is the RRC reestablishment request, the first message is an RRC reestablishment message. Alternatively, if the second message is the RRC resume request, the first message is an RRC resume message (or referred to as an RRC connection resume message). The first message may include configuration information, and the configuration information may be used to configure the SRAP entity of the remote UE. For example, the configuration information may include a second identifier, and the second identifier is the identifier of the remote UE. For example, the second identifier is the local ID allocated by the access network device to the remote UE. Optionally, the first identifier and the second identifier may be a same identifier, or may be different identifiers. The configuration information is, for example, a sidelink layer 2 remote configuration (sl-L2RemoteConfig).

For example, the access network device sends a second data packet to the relay UE. The second data packet may include the first message and the SRAP header, and the SRAP header may include the first identifier. Optionally, the SRAP header may further include information about an SRB of the remote UE used to receive the second data packet, for example, includes an identifier of an SRB 1 of the remote UE, or includes RB ID information of the remote UE.

S208: The relay UE sends a first data packet to the remote UE. Correspondingly, the remote UE receives the first data packet from the relay UE. For example, the relay UE receives the SRB 1 message (for example, the RRC resume message or the RRC reestablishment message) sent by the access network device to the remote UE. The SRB 1 message is sent between the access network device and the relay UE by using the first data packet that carries the SRB 1 message.

The first data packet and the second data packet may be a same data packet. For example, a Uu SRAP entity of the relay UE receives the second data packet from the access network device, and may submit the second data packet to a PC5 SRAP entity of the relay UE. The PC5 SRAP entity of the relay UE may not process the second data packet, but sends the second data packet to the remote UE by transmitting the PC5 RLC bearer or channel of the SRB 1 of the remote UE. The Uu SRAP entity and the PC5 SRAP entity of the relay UE may be a same entity or different entities.

Alternatively, the first data packet and the second data packet may be different data packets, but both the first data packet and the second data packet include the first message. For example, the Uu SRAP entity of the relay UE receives the second data packet from the access network device, and may submit the second data packet to the PC5 SRAP entity of the relay UE. The PC5 SRAP entity of the relay UE may remove the SRAP header included in the second data packet, re-add an SRAP header to the second data packet from which the SRAP header is removed to obtain the first data packet, and then send the first data packet to the remote UE by transmitting the PC5 RLC bearer or channel of the SRB 1 of the remote UE. The SRAP header added by the PC5 SRAP entity of the relay UE to the second data packet from which the SRAP header is removed may include the first identifier. Optionally, the SRAP header may further include information about an SRB of the remote UE used to receive the first data packet, for example, include the identifier of the SRB 1 of the remote UE or the RB ID of the remote UE.

S209: The remote UE removes an SRAP header of the first data packet via the SRAP entity to obtain the configuration information.

The remote UE has determined the SRAP entity. The SRAP entity may not include the first field, may not include the configuration information of the first field, or may include the first field that is undefined or carries the default value. Therefore, the SRAP entity may not identify (or ignore) the identifier of the remote UE included in the SRAP header. Alternatively, the SRAP entity has only a function of removing the SRAP header, but does not have a function of detecting an error packet (for example, the SRAP entity does not compare whether the identifier of the remote UE included in the SRAP header is the same as an identifier included in the SRAP entity or an identifier configured by the SRAP entity, and does not directly discard a data packet because an identifier included in an SRAP header of the received data packet is not the identifier configured by the SRAP entity). In this case, the SRAP entity removes the SRAP header. In this way, the remote UE obtains the first data packet from which the SRAP header is removed. The SRAP entity may submit, to a PDCP entity of the remote UE, the first data packet from which the SRAP header is removed, and the PDCP entity may parse the first data packet from which the SRAP header is removed to obtain the first message, so that the RRC reestablishment or the RRC resume of the remote UE can succeed, and a success rate of the RRC reestablishment or the RRC resume of the remote UE is improved.

S210: The remote UE configures the SRAP entity based on the configuration information.

As described above, the first message (for example, the RRC resume message or the RRC reestablishment message) may include the configuration information. Therefore, the remote UE may further configure (or reconfigure) the SRAP entity based on the configuration information. For example, the remote UE may configure the SRAP entity based on the second identifier included in the configuration information, so that the SRAP entity applies the second identifier. In subsequent communication, the SRAP entity may identify, based on the second identifier, whether a destination device of a received data packet is the remote UE, and when a data packet is subsequently sent via the relay UE, may add the second identifier to an SRAP header of the data packet, so that the relay UE determines a source of the data packet.

In this embodiment of this application, the remote UE may predetermine the SRAP entity. In this way, after receiving the first data packet carrying the SRAP header, the remote UE can remove the SRAP header via the SRAP entity, so that the RRC reestablishment message or the RRC resume message can be obtained, to improve the success rate of the RRC reestablishment or the RRC resume of the remote UE. In addition, the remote UE can also configure the SRAP entity based on the configuration information included in the RRC reestablishment message or the RRC resume message, so that a message carrying the SRAP header can be normally identified in a subsequent communication process. In addition, the solutions in this embodiment of this application are simple and easy to implement.

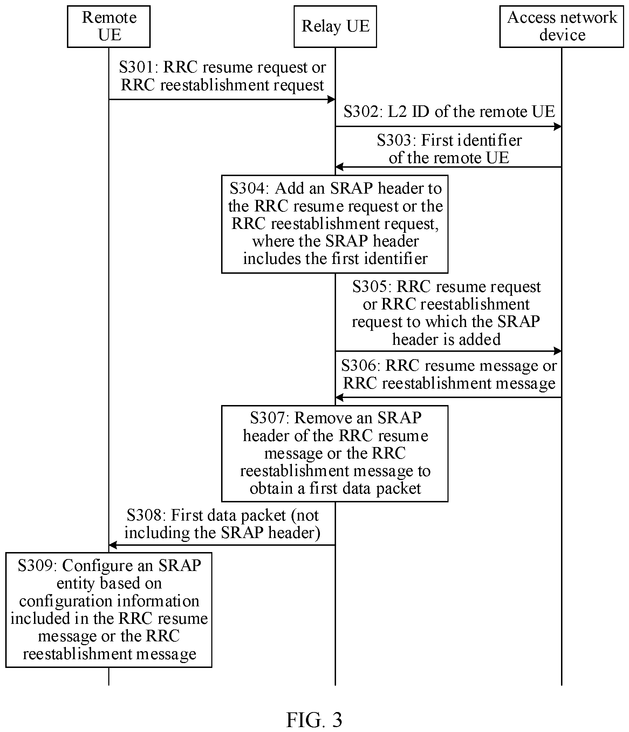

FIG. 3 is a flowchart of a second communication method according to an embodiment of this application.

S301: A remote UE sends a second message to a relay UE. Correspondingly, the relay UE receives the second message from the remote UE.

For more content of S301, refer to descriptions of S201 in the embodiment shown in FIG. 2.

S302: The relay UE sends information about the remote UE to an access network device. Correspondingly, the access network device receives the information about the remote UE from the relay UE. The information about the remote UE may include an L2 ID of the remote UE, and the L2 ID may indicate the remote UE to perform access via the relay UE.

For more content of S302, refer to descriptions of S203 in the embodiment shown in FIG. 2.

S303: The access network device sends a first identifier of the remote UE to the relay UE. Correspondingly, the relay UE receives the first identifier from the access network device. The first identifier is, for example, a local ID of the remote UE.

For more content of S303, refer to descriptions of S204 in the embodiment shown in FIG. 2.

S304: The relay UE adds an SRAP header to the second message.

For more content of S303, refer to descriptions of S205 in the embodiment shown in FIG. 2.

S305: The relay UE sends, to the access network device, the second message to which the SRAP header is added. Correspondingly, the access network device receives, from the relay UE, the second message to which the SRAP header is added. For example, the relay UE sends, to the access network device by transmitting an RLC bearer corresponding to an SRBO of the remote UE, the second message to which the SRAP header is added. The second message is an SRBO message, for example, an RRC resume request or an RRC reestablishment request.

For more content of S305, refer to descriptions of S206 in the embodiment shown in FIG. 2.

S306: The access network device sends a first message to the relay UE. Correspondingly, the relay UE receives the first message from the access network device.

For example, the access network device sends a second data packet to the relay UE. The second data packet may include the first message and the SRAP header, and the SRAP header may include the first identifier. Optionally, the SRAP header may further include information about an SRB of the remote UE used to receive the second data packet, for example, includes an identifier of an SRB1 of the remote UE, or includes RB ID information of the remote UE.

For more content of S306, refer to descriptions of S207 in the embodiment shown in FIG. 2.

S307: The relay UE processes the SRAP header to obtain a first data packet. The first data packet does not include the first identifier.

Optionally, if a first condition is met, the relay UE may process the SRAP header. Alternatively, if a first condition is not met, the relay UE may not process the SRAP header. For example, an implementation of the first condition is that the first message is a 1^{st} downlink message sent by the access network device to the remote UE on the SRB1 of the remote UE. The relay UE may determine, in the following manner, whether the first message is the 1^{st} downlink message sent to the remote UE on the SRB1: If the relay UE receives an uplink message (for example, the second message) from the remote UE on a PC5 RLC bearer or channel corresponding to an SRBO, and after receiving the uplink message, the relay UE does not send a downlink message to the remote UE on an RLC bearer corresponding to the SRB1 of the remote UE, the relay UE may determine that the first message is the 1^{st} downlink message sent by the access network device to the remote UE on the SRB 1.

For another example, another implementation of the first condition is that the second data packet includes indication information, and the indication information may indicate to process the SRAP header, or indicate that the first message is a 1^{st} downlink message sent to the remote UE on the SRB1. For example, the indication information may be included in the SRAP header of the second data packet, or may be included in a payload (payload) of the second data packet. The indication information may occupy one or more bits (bits). In other words, the access network device may add the indication information to the second data packet, so that the relay UE can process the SRAP header based on the indication information without a need to perform other determining. Therefore, implementation of the relay UE is simplified.

In addition, the first condition may have another implementation. This is not limited in this embodiment of this application.

In this embodiment of this application, a manner in which the relay UE processes the SRAP header is that the relay UE removes the SRAP header via an SRAP entity (for example, a PC5 SRAP entity or a Uu SRAP entity) of the relay UE. This is used as an example in FIG. 3. In other words, an implementation in which the first data packet does not include the first identifier is that the first data packet does not include the SRAP header.

S308: The relay UE sends the first data packet to the remote UE. Correspondingly, the remote UE receives the first data packet from the relay UE. For example, the relay UE receives an SRB1 message (for example, an RRC resume message or an RRC reestablishment message) sent by the access network device to the remote UE. The SRB1 message is sent between the access network device and the relay UE by using the first data packet that carries the SRB1 message.

S309: The remote UE configures (or reconfigures) the SRAP entity based on configuration information included in the first message.

For example, if the first data packet does not include the SRAP header, after receiving the first data packet, an RLC entity of the remote UE may submit the first data packet to a PDCP entity of the remote UE. The PDCP entity may parse the first data packet to obtain the first message, so that RRC reestablishment or RRC resume of the remote UE can succeed, and a success rate of the RRC reestablishment or the RRC resume of the remote UE is improved.

In this embodiment of this application, the remote UE does not need to predetermine the SRAP entity. For example, when the remote UE is released to an RRC inactive mode, or when the remote UE fails in an RRC connected mode, the SRAP entity may be released, and the SRAP entity does not need to be preestablished after the release. The first message may include the configuration information. After receiving the first message, the remote UE configures the SRAP entity of the remote UE based on the configuration information. In other words, the remote UE may establish the SRAP entity of the remote UE based on the configuration information. For example, the remote UE may configure the SRAP entity based on a second identifier included in the configuration information, so that the SRAP entity applies the second identifier. In subsequent communication, the SRAP entity may identify, based on the second identifier, whether a destination device of a received data packet is the remote UE.

In this embodiment of this application, the relay UE may send, to the remote UE, a data packet from which an SRAP header is removed, so that the remote UE can parse the data packet without a need to preestablish the SRAP entity. Therefore, the success rate of the RRC reestablishment or the RRC resume of the remote UE is improved, and implementation of the remote UE is simplified. In addition, the remote UE can also configure the SRAP entity based on configuration information included in the RRC reestablishment message or the RRC resume message, so that a message carrying the SRAP header can be normally identified in a subsequent communication process.

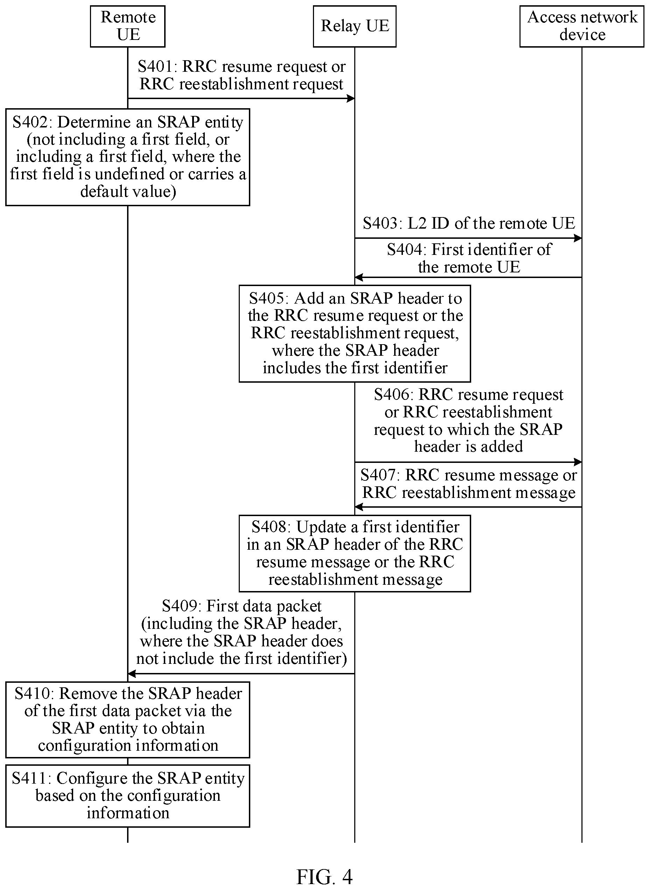

FIG. 4 is a flowchart of a third communication method according to an embodiment of this application.

S401: A remote UE sends a second message to a relay UE. Correspondingly, the relay UE receives the second message from the remote UE.

For more content of S401, refer to S201 in the embodiment shown in FIG. 2.

S402: The remote UE determines an SRAP entity. Alternatively, the remote UE obtains an SRAP entity.

For more content of S402, refer to S202 in the embodiment shown in FIG. 2.

S403: The relay UE sends information about the remote UE to an access network device. Correspondingly, the access network device receives the information about the remote UE from the relay UE. The information about the remote UE may include an L2 ID of the remote UE, and the L2 ID may indicate the remote UE to perform access via the relay UE.

For more content of S403, refer to S203 in the embodiment shown in FIG. 2.

S404: The access network device sends a first identifier of the remote UE to the relay UE. Correspondingly, the relay UE receives the first identifier from the access network device. The first identifier is, for example, a local ID of the remote UE.

For more content of S404, refer to S204 in the embodiment shown in FIG. 2.

S405: The relay UE adds an SRAP header to the second message.

For more content of S405, refer to S205 in the embodiment shown in FIG. 2.

S406: The relay UE sends, to the access network device, the second message to which the SRAP header is added. Correspondingly, the access network device receives, from the relay UE, the second message to which the SRAP header is added. For example, the relay UE sends, to the access network device by using an SRBO of the relay UE, the second message to which the SRAP header is added.

S407: The access network device sends a first message to the relay UE. Correspondingly, the relay UE receives the first message from the access network device.

For example, the access network device sends a second data packet to the relay UE. The second data packet may include the first message and the SRAP header, and the SRAP header may include the first identifier. Optionally, the SRAP header may further include information about an SRB of the remote UE used to receive the second data packet, for example, includes an identifier of an SRB1 of the remote UE, or includes RB ID information of the remote UE.

For more content of S407, refer to 5207 in the embodiment shown in FIG. 2.

S408: The relay UE processes the SRAP header to obtain a first data packet. The first data packet does not include the first identifier.

Optionally, the relay UE may process the SRAP header when determining that a first condition is met. For the first condition, refer to S307 in the embodiment shown in FIG. 3.

In this embodiment of this application, a manner in which the relay UE processes the SRAP header is that the relay UE processes the first identifier included in the SRAP header. For example, a manner in which the relay UE processes the first identifier included in the SRAP header is that the relay UE removes the first identifier in the SRAP header, and the SRAP header no longer includes the first identifier. After the relay UE removes the first identifier in the SRAP header, the SRAP header may no longer include configuration information of a first field (for descriptions of the first field, refer to the embodiment shown in FIG. 2), or the SRAP header still includes configuration information of a first field, but the first field is undefined, or the first field does not carry any information (in other words, the first field is empty).

For another example, another manner in which the relay UE processes the first identifier included in the SRAP header is that the relay UE updates (or replaces) the first identifier in the SRAP header. This is used as an example in FIG. 4. For example, the relay UE may update the first identifier in the SRAP header to a third identifier. The third identifier is, for example, a default value.

In addition, the relay UE may further process, in another manner, the first identifier included in the SRAP header. This is not limited in this embodiment of this application. After processing of the relay UE, the first data packet (for example, the first data packet is a data packet obtained by the relay UE processing the SRAP header of the second data packet) may be obtained. The first data packet still includes the SRAP header, but the SRAP header no longer includes the first identifier.

S409: The relay UE sends the first data packet to the remote UE. Correspondingly, the remote UE receives the first data packet from the relay UE. For example, the relay UE receives an SRB1 message (for example, an RRC resume message or an RRC reestablishment message) sent by the access network device to the remote UE. The SRB1 message is sent between the access network device and the relay UE by using the first data packet that carries the SRB1 message.

S410: The remote UE removes the SRAP header of the first data packet via the SRAP entity to obtain configuration information.

If the SRAP header of the first data packet does not include an identifier (the first identifier) of the remote UE, the SRAP entity of the remote UE may remove the SRAP header, and submits, to a PDCP entity of the remote UE, the first data packet from which the SRAP header is removed. The PDCP entity may parse the first data packet from which the SRAP header is removed to obtain the first message, so that RRC reestablishment or RRC resume of the remote UE can succeed, and a success rate of the RRC reestablishment or the RRC resume of the remote UE is improved.

S411: The remote UE configures (or reconfigures) the SRAP entity based on the configuration information.

For more content of S411, refer to S210 in the embodiment shown in FIG. 2.

In this embodiment of this application, the remote UE may predetermine the SRAP entity, and the relay UE may also process an SRAP header of a data packet to be sent to the remote UE, so that the data packet no longer includes the first identifier, the SRAP entity of the remote UE can remove the SRAP header of the data packet to obtain the RRC reestablishment message or the RRC resume message, and the success rate of the RRC reestablishment or the RRC resume of the remote UE is improved. In addition, the remote UE can also configure the SRAP entity based on configuration information included in the RRC reestablishment message or the RRC resume message, so that a message carrying the SRAP header can be normally identified in a subsequent communication process.

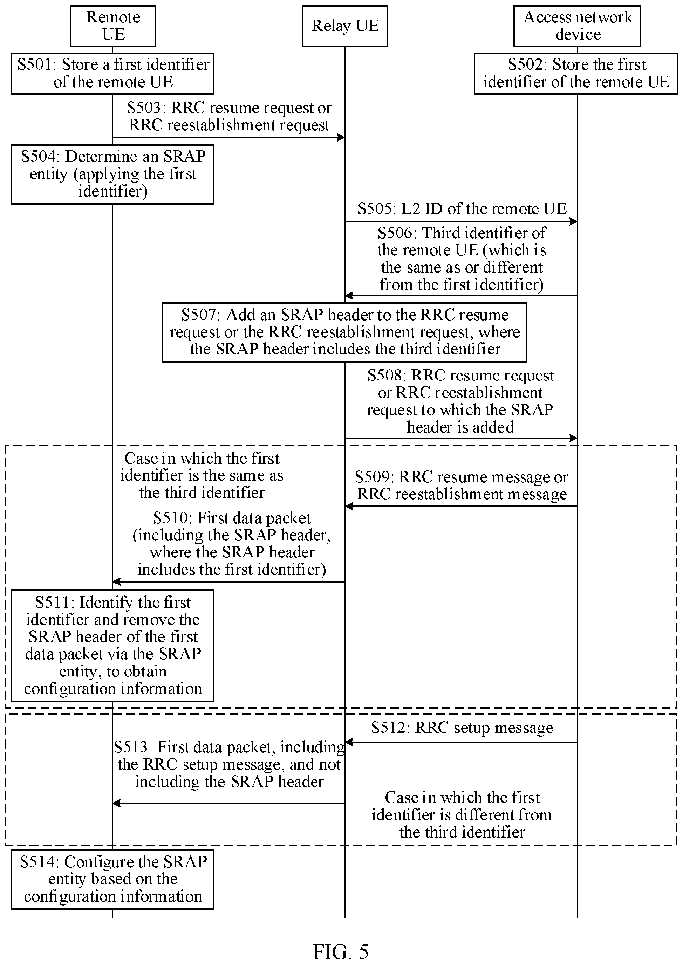

FIG. 5 is a flowchart of a fourth communication method according to an embodiment of this application.

S501: A remote UE stores a first identifier of the remote UE. The first identifier is, for example, an identifier applied by an SRAP entity of the remote UE, for example, a local ID of the remote UE. The first identifier may be obtained when the remote UE is in an RRC connected mode, may not be released when the remote UE fails in an RRC connected mode, or may not be released when the remote UE is released to an RRC inactive mode.

Optionally, the remote UE may further store a second identifier of the remote UE. The second identifier is, for example, an L2 ID of the remote UE. For example, the remote UE maintains context information of the remote UE, and the remote UE may store the first identifier and the second identifier in the context information.

S502: An access network device stores the first identifier of the remote UE.

For example, when the remote UE is in the RRC connected mode, the access network device may store the first identifier of the remote UE. Alternatively, after allocating the first identifier to the remote UE, the access network device may store the first identifier of the remote UE.

Optionally, the access network device may further store the second identifier of the remote UE. For example, the access network device also maintains the context information of the remote UE, and the access network device may also store the first identifier and the second identifier in the context information.

S501 may be performed before S502, may be performed after S502, or may be performed simultaneously with S502.

S503: The remote UE sends a second message to a relay UE. Correspondingly, the relay UE receives the second message from the remote UE.

Optionally, the second message may include the first identifier.

For more content of S503, refer to S201 in the embodiment shown in FIG. 2.

S504: The remote UE determines the SRAP entity. Alternatively, the remote UE obtains the SRAP entity.

If the remote UE has released the SRAP entity before performing RRC reestablishment or RRC resume, the remote UE may establish the SRAP entity. For example, when the remote UE fails in the RRC connected mode, or when the remote UE is released to the RRC inactive mode, the SRAP entity may be released. Optionally, the remote UE may establish the SRAP entity based on a default (default) configuration, or the remote UE may establish the SRAP entity based on no configuration. For example, the remote UE may establish an SRAP entity having an SRAP function. The SRAP entity established by the remote UE may apply the first identifier. For example, the SRAP entity includes configuration information of a first field, and the first field carries the first identifier. In other words, the SRAP entity may identify an error packet based on the first identifier. If an SRAP entity of a data packet received by the remote UE does not include the first identifier, the remote UE may discard the data packet.

Alternatively, the remote UE does not release the SRAP entity before performing RRC reestablishment or RRC resume. For example, when the remote UE fails in the RRC connected mode, or when the remote UE is released to the RRC inactive mode, the SRAP entity is not released. In this case, if a configuration of the SRAP entity that is not released has been released (for example, the SRAP entity that is not released does not apply the first identifier), the remote UE may reconfigure the SRAP entity, so that the SRAP entity applies the first identifier. Alternatively, if the SRAP entity that is not released has applied the first identifier, the remote UE does not need to process the SRAP entity. In other words, S504 does not need to be performed. Therefore, S504 is an optional step.

If S504 is performed, S504 may be performed before S503, may be performed after S503, or may be performed simultaneously with S503. This is not specifically limited. For example, the SRAP entity may be established after the remote UE sends an RRC resume request or an RRC reestablishment request, may be established when the remote UE is ready to send an RRC resume request or an RRC reestablishment request, may be established when the remote UE is ready to initiate the RRC connection resume or the RRC connection reestablishment, may be established when or after a timer T301 or a timer T311 is started, may be established when or after a timer T319 or a timer T319a is started, or may be established when the remote UE initiates the RRC connection resume or the RRC connection reestablishment.

S505: The relay UE sends information about the remote UE to the access network device. Correspondingly, the access network device receives the information about the remote UE from the relay UE. The information about the remote UE may include the second identifier of the remote UE, for example, the L2 ID of the remote UE, and the L2 ID may indicate the remote UE to perform access via the relay UE.

For more content of S505, refer to S203 in the embodiment shown in FIG. 2.

S506: The access network device sends a third identifier of the remote UE to the relay UE. Correspondingly, the relay UE receives the third identifier from the access network device. The third identifier is, for example, the local ID of the remote UE.

For example, the access network device may allocate the third identifier to the remote UE, and send SRAP configuration information of the remote UE to the relay UE. The SRAP configuration information may include the third identifier.

Optionally, after receiving the second identifier, the access network device may determine the first identifier of the remote UE based on the second identifier. For example, if the access network device stores the first identifier and the second identifier in the context information of the remote UE, the first identifier can be found by using the second identifier as an index. If the access network device obtains the first identifier, when allocating an identifier to the remote UE, the access network device may preferentially allocate the first identifier. For example, if a second condition is met, the access network device may allocate the first identifier to the remote UE. In this case, the first identifier is the same as the third identifier. Alternatively, if a second condition is not met, the access network device may not allocate the first identifier to the remote UE, but allocates a new identifier. In this case, the first identifier is different from the third identifier.

For example, a kind of the second condition is that the first identifier does not conflict with an identifier of another remote UE connected to (or served by) the relay UE. There may be one or more remote UEs served by one relay UE. Therefore, in the relay UE, different remote UEs may be distinguished by using identifiers (for example, local IDs) of the remote UEs. If the first identifier has been allocated to the another remote UE served by the relay UE, it indicates that the first identifier conflicts with the identifier of the another remote UE served by the relay UE. In this case, if the access network device continues to allocate the first identifier to the remote UE, the different remote UEs served by the relay UE are confused. Therefore, the access network device may allocate a new identifier to the remote UE, and no longer allocates the first identifier. If the first identifier is not allocated to the another remote UE served by the relay UE, it indicates that the first identifier does not conflict with the identifier of the another remote UE served by the relay UE, and the access network device may continue to allocate the first identifier to the remote UE.

In addition, the second condition may have another manner. This is not limited in this embodiment of this application.

S507: The relay UE adds an SRAP header to the second message.

The relay UE may add the SRAP header to the second message based on the received SRAP configuration information. The SRAP header includes the third identifier. Optionally, the SRAP header further includes information about an SRB of the remote UE to send the second message, for example, includes an identifier of an SRBO of the remote UE or RB ID information of the remote UE.

S508: The relay UE sends, to the access network device, the second message to which the SRAP header is added. Correspondingly, the access network device receives, from the relay UE, the second message to which the SRAP header is added. For example, the relay UE sends, to the access network device by transmitting an RLC bearer corresponding to the SRBO of the remote UE, the second message to which the SRAP header is added. The second message is an SRBO message, for example, the RRC resume request or the RRC reestablishment request.

Because the third identifier allocated by the access network device may be the same as the first identifier, or may be different from the first identifier, subsequent steps may include two branches. S509 to S511 are a branch 1. If the first identifier is the same as the third identifier, the branch 1 may be performed. S512 and S513 are a branch 2. If the first identifier is different from the third identifier, or if the access network device does not obtain the first identifier of the remote UE (for example, does not obtain the context information of the remote UE), the branch 2 may be performed. The branch 1 and the branch 2 are two parallel solutions, and either may be selected and performed.

Optionally, if the access network device obtains the first identifier, before the branch 1 or the branch 2 is performed, the access network device may further determine whether the first identifier is the same as the third identifier. If the first identifier is the same as the third identifier, the branch 1 is performed. If the first identifier is different from the third identifier, the branch 2 is performed.

S509: The access network device sends a first message to the relay UE. Correspondingly, the relay UE receives the first message from the access network device. The first message is sent by the access network device to the remote UE via the relay UE in response to the second message sent by the remote UE via the relay UE. If the second message is the RRC reestablishment request, the first message is an RRC reestablishment message. Alternatively, if the second message is the RRC resume request, the first message is an RRC resume message. The first message may include configuration information, and the configuration information may be used to configure the SRAP entity of the remote UE. For example, the configuration information may include the first identifier. The configuration information is, for example, sl-L2RemoteConfig.

For example, the access network device sends a second data packet to the relay UE. The second data packet may include the first message and the SRAP header, and the SRAP header may include the first identifier. Optionally, the SRAP header may further include information about an SRB of the remote UE used to receive the second data packet, for example, includes an identifier of an SRB1 of the remote UE, or includes the RB ID information of the remote UE.

S510: The relay UE sends a first data packet to the remote UE. Correspondingly, the remote UE receives the first data packet from the relay UE. For example, the relay UE receives an SRB1 message (for example, the RRC resume message or the RRC reestablishment message) sent by the access network device to the remote UE. The SRB1 message is sent between the access network device and the relay UE by using the first data packet that carries the SRB1 message.

For more content of S510, refer to S208 in the embodiment shown in FIG. 2.

S511: The remote UE identifies the first identifier and removes an SRAP header of the first data packet via the SRAP entity, to obtain the configuration information.

The SRAP entity of the remote UE applies the first identifier, and the SRAP header of the first data packet also includes the first identifier. Therefore, the SRAP entity successfully checks the first data packet, and considers that the first data packet is a correct data packet. In this case, the SRAP entity may remove the SRAP header to obtain the first data packet from which the SRAP header is removed. The SRAP entity may submit, to a PDCP entity of the remote UE, the first data packet from which the SRAP header is removed, and the PDCP entity may parse the first data packet from which the SRAP header is removed to obtain the first message, so that the RRC reestablishment or the RRC resume of the remote UE can succeed, and a success rate of the RRC reestablishment or the RRC resume of the remote UE is improved.

S512: The access network device sends the first message to the relay UE. Correspondingly, the relay UE receives the first message from the access network device.

The access network device may store the first identifier in the context information of the remote UE. Therefore, if the first identifier is different from the third identifier, or the access network device does not obtain the first identifier, the access network device may consider that the context information of the remote UE changes. Therefore, in this case, the access network device may no longer perform an RRC reestablishment process or an RRC resume process, but instead perform an RRC setup process. In this case, optionally, the first message is an RRC setup message. The RRC setup message may include configuration information, and the configuration information may be used to configure the SRAP entity of the remote UE. For example, the configuration information may include the third identifier. The configuration information is, for example, the sl-L2RemoteConfig.

For example, the access network device sends the second data packet to the relay UE by using the SRBO. The second data packet may include the first message and the SRAP header, and the SRAP header may include the third identifier. Optionally, the SRAP header may further include the information about the SRB of the remote UE used to receive the second data packet, for example, includes the identifier of the SRBO of the remote UE.

S513: The relay UE sends the first data packet to the remote UE. Correspondingly, the remote UE receives the first data packet from the relay UE.

After receiving the second data packet, the relay UE determines that the SRB of the remote UE used to receive the second data packet is the SRBO. Because the SRAP header is not added when the relay UE and the remote UE perform transmission on the SRBO, the relay UE may remove the SRAP header of the second data packet to obtain the first data packet, and then the relay UE sends the first data packet to the remote UE by transmitting a PC5 RLC bearer or channel corresponding to the SRBO of the remote UE.

If the first data packet does not include the SRAP header, after receiving the first data packet, an RLC entity corresponding to the SRBO of the remote UE may submit the first data packet to the PDCP entity of the remote UE. The PDCP entity may parse the first data packet to obtain the first message, so that the remote UE can establish an RRC connection, and a network connection success rate of the remote UE is improved.

S514: The remote UE configures (or reconfigures) the SRAP entity based on the configuration information.

S514 may be applicable to both the branch 1 and the branch 2. For example, for the branch 1, after obtaining the first message, the remote UE may obtain the configuration information included in the first message to configure the SRAP entity. For example, the remote UE may configure the SRAP entity based on the first identifier included in the configuration information, so that the SRAP entity applies the first identifier. In subsequent communication, the SRAP entity may identify, based on the first identifier, whether a destination device of a received data packet is the remote UE.

Alternatively, for the branch 2, after obtaining the first message, the remote UE may configure the SRAP entity of the remote UE based on the configuration information included in the first message. For example, the remote UE may configure the SRAP entity based on the third identifier included in the configuration information, so that the SRAP entity applies the third identifier. In subsequent communication, the SRAP entity may identify, based on the third identifier, whether a destination device of a received data packet is the remote UE.

In this embodiment of this application, the remote UE may obtain the SRAP entity by using an unreleased first identifier, or the access network device may preferentially allocate the first identifier to the remote UE, so that the SRAP entity of the remote UE can identify the first message from the access network device, and the success rate of the RRC reestablishment or the RRC resume of the remote UE is improved. If the access network device allocates another identifier to the remote UE, the access network device may also perform the RRC setup process, and performs message transmission by using the SRBO. The SRAP header does not need to be added to a message whose transmission is performed by using the SRBO, and the remote UE can also identify the message. It can be learned that, according to the solutions provided in this embodiment of this application, the network connection success rate of the remote UE is improved. In addition, in this embodiment of this application, configuration logic of the access network device is enhanced, and the UE (the remote UE and/or the relay UE) is slightly modified.

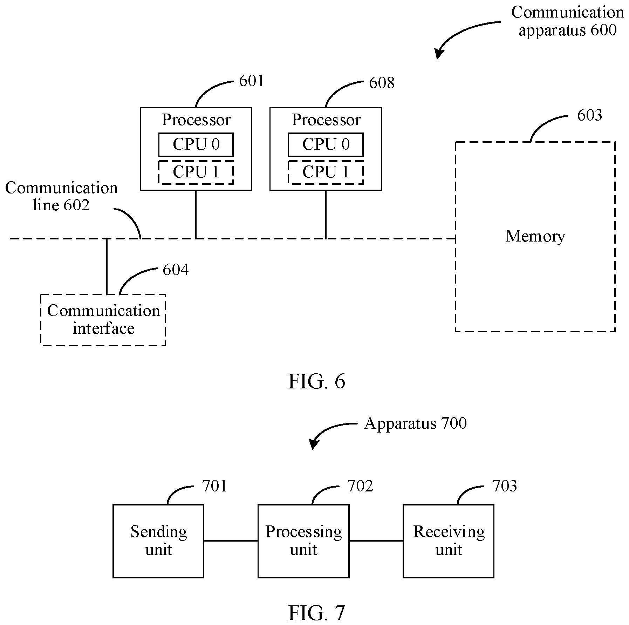

FIG. 6 is a diagram of a structure of a communication apparatus according to an embodiment of this application. The communication apparatus 600 may be the access network device in any one of embodiments shown in FIG. 2 to FIG. 5 or a circuit system of the access network device, and is configured to implement the method corresponding to the access network device in the foregoing method embodiments. Alternatively, the communication apparatus 600 may be a circuit system of the remote UE in any one of embodiments shown in FIG. 2 to FIG. 5, and is configured to implement the method corresponding to the remote UE in the foregoing method embodiments. Alternatively, the communication apparatus 600 may be a circuit system of the relay UE in any one of embodiments shown in FIG. 2 to FIG. 5, and is configured to implement the method corresponding to the relay UE in the foregoing method embodiments. For specific functions, refer to descriptions of the foregoing method embodiments. For example, a circuit system is a chip system.

The communication apparatus 600 includes at least one processor 601. The processor 601 may be configured to perform internal processing of the apparatus to implement a specific control processing function. Optionally, the processor 601 includes instructions. Optionally, the processor 601 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 600 includes one or more memories 603. The memory 603 is configured to store instructions. Optionally, the memory 603 may further store data. The processor and the memory may be disposed separately, or may be integrated together.

Optionally, the communication apparatus 600 includes a communication line 602 and at least one communication interface 604. Because the memory 603, the communication line 602, and the communication interface 604 are all optional, they are all represented by dashed lines in FIG. 6.

Optionally, the communication apparatus 600 may further include a transceiver and/or an antenna. The transceiver may be configured to send information to another apparatus or receive information from another apparatus. The transceiver may be referred to as a transceiver, a transceiver circuit, an input/output interface, or the like, and is configured to implement a receiving and sending function of the communication apparatus 600 via the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 601 may include a general-purpose central processing unit (central processing unit, CPU), a microprocessor, an application-specific integrated circuit (application-specific integrated circuit, ASIC), or one or more integrated circuits configured to control program execution of the solutions in this application.

The communication line 602 may include a path for transmitting information between the foregoing assemblies.

The communication interface 604 uses any apparatus like a transceiver, and is configured to communicate with another device or a communication network, for example, an Ethernet, a radio access network (radio access network, RAN), a wireless local area network (wireless local area network, WLAN), or a wired access network.

The memory 603 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray optical disc, and the like), a magnetic disk storage medium or another magnetic storage device, or any other medium that can be used to carry or store expected program code in a form of instructions or a data structure and that can be accessed by a computer. However, the memory 603 is not limited thereto. The memory 603 may exist independently, and is connected to the processor 601 via the communication line 602. Alternatively, the memory 603 may be integrated with the processor 601.

The memory 603 is configured to store computer-executable instructions for performing the solutions in this application, and the computer-executable instructions are executed under control of the processor 601. The processor 601 is configured to execute the computer-executable instructions stored in the memory 603, to implement the communication methods provided in embodiments of this application.

Optionally, the computer-executable instructions in this embodiment of this application may also be referred to as application program code. This is not specifically limited in this embodiment of this application.

During specific implementation, in an embodiment, the processor 601 may include one or more CPUs, for example, a CPU 0 and a CPU 1 in FIG. 6.

During specific implementation, in an embodiment, the communication apparatus 600 may include a plurality of processors, for example, the processor 601 and a processor 608 in FIG. 6. Each of the processors may be a single-core (single-CPU) processor, or may be a multi-core (multi-CPU) processor. The processor herein may refer to one or more devices, circuits, and/or processing cores configured to process data (for example, computer program instructions).

When the apparatus shown in FIG. 6 is a chip, for example, a chip of the access network device, a chip of the remote UE, or a chip of the relay UE, the chip includes a processor 601 (which may further include a processor 608), a communication line 602, a memory 603, and a communication interface 604. Specifically, the communication interface 604 may be an input interface, a pin, a circuit, or the like. The memory 603 may be a register, a cache, or the like. The processor 601 and the processor 608 may be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated modules may be implemented in a form of hardware, or may be implemented in a form of a software functional module. It should be noted that, in embodiments of this application, module division is an example, and is merely logical function division. During actual implementation, another division manner may be used. For example, when each functional module is obtained through division based on each corresponding function, FIG. 7 is a diagram of an apparatus. The apparatus 700 may be the access network device, the remote UE, or the relay UE in the foregoing method embodiments, or a chip in the access network device, a chip in the remote UE, or a chip in the relay UE. The apparatus 700 includes a sending unit 701, a processing unit 702, and a receiving unit 703.

It should be understood that the apparatus 700 may be configured to implement steps performed by the access network device, the remote UE, or the relay UE in the methods in embodiments of this application. For related features, refer to the foregoing embodiments. Details are not described herein again.

Optionally, functions/implementation processes of the sending unit 701, the receiving unit 703, and the processing unit 702 in FIG. 7 may be implemented by the processor 601 in FIG. 6 invoking the computer-executable instructions stored in the memory 603. Alternatively, functions/implementation processes of the processing unit 702 in FIG. 7 may be implemented by the processor 601 in FIG. 6 invoking the computer-executable instructions stored in the memory 603, and the functions/implementation processes of the sending unit 701 and the receiving unit 703 in FIG. 7 may be implemented by the communication interface 604 in FIG. 6.

Alternatively, when the apparatus 700 is a chip or a circuit, functions/implementation processes of the sending unit 701 and the receiving unit 703 may be implemented via a pin, a circuit, or the like.

This application further provides a computer-readable storage medium. The computer-readable storage medium stores a computer program or instructions, and when the computer program or the instructions are run, the method performed by the access network device, the remote UE, or the relay UE in the foregoing method embodiments is implemented. In this way, the functions in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the access network device, the remote UE, or the relay UE in any one of the foregoing method embodiments.

Embodiments of this application further provide a processing apparatus. The processing apparatus includes a processor and an interface. The processor is used to perform the method performed by the access network device, the remote UE, or the relay UE in any one of the foregoing method embodiments.

All or a part of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on a computer, the procedures or the functions according to embodiments of this application are all or partially generated. The computer may be a general-purpose computer, a special-purpose computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by the computer, or a data storage device, such as a server and a data center, integrating one or more usable media. The usable medium may be a magnetic medium (for example, a floppy disk, a hard disk, or a magnetic tape), an optical medium (for example, a DVD), a semiconductor medium (for example, a solid-state drive, (solid-state drive, SSD)), or the like.

Various illustrative logic units and circuits described in embodiments of this application may implement or operate the described functions by using a general-purpose processor, a digital signal processor (digital signal processor, DSP), an application-specific integrated circuit (application-specific integrated circuit, ASIC), a field-programmable gate array (field-programmable gate array, FPGA) or another programmable logic apparatus, a discrete gate or transistor logic, a discrete hardware part, or a design of any combination of the foregoing devices. The general-purpose processor may be a microprocessor. Alternatively, the general-purpose processor may be any conventional processor, controller, microcontroller, or state machine. The processor may also be implemented by using a combination of computing apparatuses, such as a digital signal processor and a microprocessor, a plurality of microprocessors, one or more microprocessors in combination with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to the processor, so that the processor may read information from the storage medium and write information into the storage medium. Alternatively, the storage medium may be integrated into the processor. The processor and the storage medium may be disposed in an ASIC, and the ASIC may be disposed in a terminal device. Alternatively, the processor and the storage medium may be disposed in different parts of a terminal device.

These computer program instructions may alternatively be loaded on a computer or another programmable data processing device, so that a series of operation steps are performed on the computer or the another programmable device to generate computer-implemented processing. Therefore, the instructions executed on the computer or the another programmable device provide steps for implementing a specified function in one or more procedures in flowcharts and/or in one or more blocks in block diagrams.

Although embodiments of this application are described with reference to specific features and embodiments thereof, it is clear that various modifications and combinations may be made to embodiments of this application without departing from the scope of embodiments of this application. Correspondingly, embodiments of this application and the accompanying drawings are merely example descriptions of embodiments of this application defined by the appended claims, and are considered to cover any or all modifications, variations, combinations, or equivalents in the scope of embodiments of this application. Apparently, a person skilled in the art may make various modifications and variations to embodiments of this application without departing from the scope of embodiments of this application. In this way, embodiments of this application are also intended to cover these modifications and variations provided that they fall within the scope of the claims of embodiments of this application and equivalent technologies thereof.

## Claims

1. A communication method, applied to a remote terminal device, wherein the method comprises:
when the remote terminal device initiates radio resource control RRC connection resume or RRC connection reestablishment to a first network device via a relay terminal device, applying, by a sidelink relay adaptation protocol SRAP entity of the remote terminal device, a default configuration, wherein the SRAP entity is configured to receive an RRC resume message or an RRC reestablishment message from the first network device;
receiving, by the remote terminal device, a first data packet from the relay terminal device, wherein the first data packet comprises a first message and an SRAP header, and the first message is the RRC resume message or the RRC reestablishment message;
removing, by the SRAP entity, the SRAP header to obtain configuration information; and
configuring, by the remote terminal device, the SRAP entity based on the configuration information.

2. The method according to claim 1, wherein before the applying, by an SRAP entity, a default configuration, the method further comprises:
establishing, by the remote terminal device, the SRAP entity.

3. The method according to claim 1, wherein the SRAP entity is not released when the remote terminal device is released to an RRC inactive mode.

4. The method according to any one of claims 1 to 3, wherein
after applying the default configuration, the SRAP entity does not comprise configuration information of a first field; or
after applying the default configuration, the SRAP entity comprises configuration information of a first field, and the first field is an undefined field, or the first field carries a default value, wherein
the first field is used to carry an identifier of the remote terminal device.

5. The method according to any one of claims 1 to 4, wherein
the SRAP header comprises a first identifier, and the first identifier is the identifier of the remote terminal device; or
the SRAP header does not comprise the identifier of the remote terminal device.

6. The method according to claim 5, wherein the method further comprises:
ignoring, by the SRAP entity, the identifier of the remote terminal device in the SRAP header, and removing the SRAP header.

7. The method according to any one of claims 1 to 6, wherein the method further comprises:
submitting, by the remote terminal device, the first message to a packet data convergence protocol PDCP entity of a signaling radio bearer SRB 1.

8. The method according to any one of claims 1 to 7, wherein the configuring, by the remote terminal device, the SRAP entity based on the configuration information comprises:
configuring, by the remote terminal device, the SRAP entity based on a second identifier comprised in the configuration information, wherein the second identifier is the identifier of the remote terminal device.

9. A communication method, applied to a relay terminal device, wherein the method comprises:
obtaining, by an SRAP entity of the relay terminal device, a second data packet, wherein the second data packet comprises an SRAP header and a first message, the SRAP header comprises a first identifier of a remote terminal device, and the first message is an RRC resume message or an RRC reestablishment message;
processing, by the SRAP entity, the SRAP header to obtain a first data packet, wherein the first data packet does not comprise the first identifier; and
sending, by the relay terminal device, the first data packet to the remote terminal device.

10. The method according to claim 9, wherein the processing, by the SRAP entity, the SRAP header to obtain a first data packet comprises:
removing, by the SRAP entity, the SRAP header to obtain the first data packet; or
processing, by the SRAP entity, the first identifier in the SRAP header to obtain the first data packet.

11. The method according to claim 10, wherein the processing, by the SRAP entity, the first identifier in the SRAP header comprises:
updating, by the SRAP entity, the first identifier; or
removing, by the SRAP entity, the first identifier.

12. The method according to any one of claims 9 to 11, wherein the method further comprises:
determining, by the relay terminal device, that the first message is a 1^{st} downlink message sent to the remote terminal device on an SRB 1 of the remote terminal device; or
determining, by the relay terminal device, that the second data packet comprises indication information, wherein the indication information indicates to process the SRAP header.

13. A communication method, applied to a remote terminal device, wherein the method comprises:
storing, by the remote terminal device, a first identifier of the remote terminal device, wherein the first identifier is obtained by the remote terminal device in an RRC connected mode, and the first identifier is an identifier applied by an SRAP entity of the remote terminal device.

14. The method according to claim 13, wherein the method further comprises:
sending, by the remote terminal device, a second message to a relay terminal device, wherein the second message comprises the first identifier, and the second message is an RRC connection resume request message or an RRC reestablishment request message.

15. The method according to claim 13 or 14, wherein the method further comprises:
when initiating an RRC connection resume process or an RRC reestablishment process, establishing, by the remote terminal device, the SRAP entity.

16. The method according to claim 15, wherein the establishing the SRAP entity comprises:
establishing, by the remote terminal device, the SRAP entity based on a default configuration.

17. The method according to claim 13 or 14, wherein the SRAP entity is not released when the remote terminal device is released to an RRC inactive mode.

18. The method according to claim 17, wherein the method further comprises:
when initiating an RRC connection resume process or an RRC reestablishment process, reconfiguring, by the remote terminal device, the SRAP entity that is not released.

19. The method according to any one of claims 13 to 18, wherein the method further comprises:
receiving, by an SRB1 of the remote terminal device, a first data packet from the relay terminal device, wherein the first data packet comprises a first message and an SRAP header, the SRAP header comprises the first identifier, and the first message is an RRC connection resume message or an RRC reestablishment message;
identifying, by the SRAP entity, the first identifier, and removing the SRAP header to obtain configuration information; and
configuring, by the remote terminal device, the SRAP entity based on the configuration information.

20. The method according to any one of claims 13 to 18, wherein the method further comprises:
receiving, by an SRBO of the remote terminal device, a first data packet from the relay terminal device, wherein the first data packet comprises an RRC setup message, and the first data packet does not comprise an SRAP header; and
configuring, by the remote terminal device, the SRAP entity based on configuration information comprised in the RRC setup message.

21. A communication method, applied to an access network device, wherein the method comprises:
receiving, by the access network device, a second identifier of a remote terminal device from a relay terminal device;
determining, by the access network device, a first identifier of the remote terminal device based on the second identifier; and
sending, by the access network device, a first message to the relay terminal device, wherein the first message comprises a third identifier, and the first identifier is the same as or different from the third identifier, wherein the first message is an RRC connection resume message, an RRC reestablishment message, or an RRC setup message.

22. The method according to claim 21, wherein
if the first identifier does not conflict with an identifier of another remote terminal device connected to the relay terminal device, the first identifier is the same as the third identifier, and the first message is the RRC connection resume message or the RRC reestablishment message; or
if the first identifier conflicts with an identifier of another remote terminal device connected to the relay terminal device, the first identifier is different from the third identifier, and the first message is the RRC setup message.

23. The method according to claim 21 or 22, wherein
if the first message is the RRC connection resume message or the RRC reestablishment message, the first message is sent by using an SRB1; or
if the first message is the RRC setup message, the first message is sent by using an SRBO.

24. A communication device, comprising:
one or more processors;
one or more memories; and
one or more computer programs, wherein the one or more computer programs are stored in the one or more memories, the one or more computer programs comprise instructions, and when the instructions are executed by the one or more processors of the communication device, the communication device is enabled to perform the method according to any one of claims 1 to 8, the method according to any one of claims 9 to 12, or the method according to any one of claims 13 to 20.

25. A communication device, comprising:
one or more processors;
one or more memories; and
one or more computer programs, wherein the one or more computer programs are stored in the one or more memories, the one or more computer programs comprise instructions, and when the instructions are executed by the one or more processors of the communication device, the communication device is enabled to perform the method according to any one of claims 21 to 23.

26. A computer-readable storage medium, wherein the computer-readable storage medium is configured to store a computer program, and when the computer program is run on a computer, the computer is enabled to perform the method according to any one of claims 1 to 8, the method according to any one of claims 9 to 12, the method according to any one of claims 13 to 20, or the method according to any one of claims 21 to 23.

27. A chip, comprising one or more processors and a communication interface, wherein the one or more processors are configured to read instructions, to perform the method according to any one of claims 1 to 8, the method according to any one of claims 9 to 12, the method according to any one of claims 13 to 20, or the method according to any one of claims 21 to 23.
